# FASCICULE DE BREVET EUROPEEN

(11) **EP 1 080 002 B1**
(45) Date de publication et mention de la délivrance du brevet: **04.09.2002**
(21) Numéro de dépôt: 99920880.4
(22) Date de dépôt: 18.05.1999
(51) Int. Cl.: B60T 13/569, B60T 13/575

(54) **SERVOMOTEUR PNEUMATIQUE A DISQUE DE REACTION FLOTTANT ET A REACTION DYNAMIQUEMENT ANNULABLE**
PNEUMATISCHER BREMSKRAFTVERSTÄRKER MIT SCHWIMMENDER REAKTIONSSCHEIBE UND DYNAMISCH ANNULIERBARER REAKTION
PNEUMATIC SERVOMOTOR WITH FLOATING REACTION PLATE AND REACTION CAPABLE OF DYNAMIC CANCELLATION

(30) Priorité: 29.05.1998 FR 9806783; 26.06.1998 FR 9808100
(43) Date de publication de la demande: 07.03.2001
(73) Titulaire: Bosch Systemes de Freinage, 93700 Drancy (FR)
(72) Inventeur: LEVRAI, Roland, F-93240 Stains (FR); PUJOL, Hervé, F-93310 Le Pré-Saint-Gervais (FR); BOISSEAU, Jean-Pierre, F-75014 Paris (FR)
(74) Mandataire: Hurwic, Aleksander Wiktor
(86) Numéro de dépôt international: FR9901177
(87) Numéro de publication internationale: WO99062749

(56) Documents cités:
- EP-A- 0 509 866
- WO-A-94/00325

## Description

La présente invention concerne un servomoteur pneumatique d'assistance au freinage.

Plus précisément, l'invention concerne un servomoteur pneumatique d'assistance au freinage comprenant : une enveloppe rigide; une cloison mobile délimitant, de façon étanche, une chambre avant et une chambre arrière à l'intérieur de l'enveloppe, la chambre avant étant en fonctionnement soumise à une première pression et la chambre arrière étant sélectivement reliée à la chambre avant ou soumise à une seconde pression supérieure à la première; un piston pneumatique se déplaçant avec la cloison mobile; une tige de commande axiale se déplaçant dans le piston en fonction d'une force d'entrée sélectivement exercée à l'encontre d'une force de rappel et orientée suivant une direction axiale d'actionnement pointant vers la chambre avant, la force de rappel sollicitant la tige de commande vers une position de retour et la force d'entrée sollicitant la tige de commande vers une position d'actionnement qui dépend de la force d'entrée; un plongeur entraîné en coulissement dans le piston par la tige de commande; un clapet à trois voies reliant la chambre arrière à la chambre avant lorsque la tige de commande est en position de repos, et soumettant la chambre arrière à la seconde pression lorsqu'il est actionné par un déplacement de la tige de commande vers sa position d'actionnement; des moyens de transmission de force, propres à recevoir et à retransmettre une partie au moins de la force d'entrée transmise par une face avant du plongeur, et une force d'assistance exercée par une face avant du piston lorsque le clapet est actionné, ces moyens de transmission de force comprenant eux-mêmes une tige de poussée dont une extrémité adjacente au plongeur est coiffée par une coupelle dans laquelle est logé un disque de réaction, une première face du disque de réaction recevant la force d'entrée et la force d'assistance, et une seconde face du disque de réaction prenant appui sur la coupelle; et des moyens de butée pour limiter à une course déterminée le coulissement du plongeur par rapport à la coupelle.

Des dispositifs de ce type sont bien connus dans l'art antérieur, tel qu'illustré par exemple par les documents de brevets US - 3 470 697. FR - 2 532 084, et FR - 2 658 466.

Le souci permanent d'une réduction des distances de freinage a récemment conduit à développer divers agencements visant à réduire le temps de réponse des servomoteurs, en particulier lors d'un freinage en urgence.

L'invention se situe dans ce contexte et a pour but de proposer une solution simple à ce problème, en permettant à la fois une exploitation optimale et immédiate de la force de freinage exercée par le conducteur, une ouverture plus grande du clapet d'entrée du servomoteur, et un meilleur écoulement de l'air vers la chambre arrière du servomoteur.

A cette fin, le servomoteur de l'invention, par ailleurs conforme à la définition qu'en donne le préambule ci-dessus, est essentiellement caractérisé en ce que les moyens de transmission de force comprennent un organe intermédiaire monté axialement coulissant par rapport au plongeur et au piston, et susceptible d'être entraîné par le plongeur, par rapport au piston, sur une distance d'entraînement supérieure à la course déterminée, en ce que cet organe intermédiaire est au moins en partie interposé entre la face avant du piston et la première face du disque de réaction pour pouvoir retransmettre au disque de réaction la force d'assistance, lorsqu'elle apparaît, et en ce que les moyens de butée sont portés par le plongeur et l'organe intermédiaire et définissent un débattement maximum du plongeur par rapport à l'organe intermédiaire.

Selon un mode de réalisation préféré de l'invention, l'organe intermédiaire est en partie au moins radialement disposé entre le plongeur et un alésage axial étagé du piston, et en partie au moins radialement disposé entre la coupelle et l'alésage axial étagé du piston.

Les moyens de butée peuvent par exemple comprendre un jonc solidaire du plongeur et monté coulissant dans une gorge de l'organe intermédiaire, ainsi qu'un épaulement du plongeur, susceptible de venir en appui sur une face arrière de l'organe intermédiaire.

Grâce à l'agencement donné au servomoteur de l'invention, il est possible de faire en sorte que le piston soit sollicité vers sa position de repos par un ressort qui n'exerce aucune force sur l'organe intermédiaire lui-même.

En outre, il est possible de faire en sorte que le servomoteur de l'invention, une fois actionné par un coup de frein brusque, continue d'appliquer une force de freinage importante, même si le conducteur relâche partiellement son propre effort de freinage.

A cette fin, on prévoit de préférence que la cloison mobile comprenne une jupe rigide montée coulissante par rapport au piston pour pouvoir prendre, par rapport au piston, une position avancée dans la direction axiale d'actionnement, et que le servomoteur comprenne des moyens d'assujettissement de la coupelle par rapport au piston, ces moyens d'assujettissement étant placés dans un état opérationnel par l'organe intermédiaire lorsque cet organe intermédiaire atteint une position d'entraînement prédéterminée par rapport au piston, et étant bloqués dans leur état opérationnel par la jupe rigide, lorsque cette jupe rigide adopte sa position avancée.

Selon un mode de réalisation possible, les moyens d'assujettissement de la coupelle par rapport au piston comprennent un perçage radial à bord franc pratiqué dans l'alésage axial du piston, un perçage radial à bord progressif pratiqué dans l'organe intermédiaire, un logement externe défini sur la coupelle, et une bille engagée dans le perçage à bord franc, cette bille traversant le perçage à bord progressif pour venir s'engager dans le logement lorsque l'organe intermédiaire a atteint sa position d'entraînement prédéterminée.

Dans ce cas, la jupe rigide présente par exemple un bord interne de blocage propre à appliquer la bille dans le logement lorsque cette jupe rigide adopte sa position avancée alors que l'organe intermédiaire a atteint sa position d'entraînement prédéterminée.

D'autres caractéristiques et avantages de l'invention ressortiront clairement de la description qui en est faite ci-après, à titre indicatif et nullement limitatif, en référence aux dessins annexés, dans lesquels :
- la Figure 1 est une vue en coupe partielle d'un servomoteur conforme à l'invention, observé au repos;
- la Figure 2 est une vue en coupe partielle d'un servomoteur conforme à l'invention, observé juste à l'instant où une force d'entrée brutale est appliquée sur la tige de commande:

- la Figure 3 est une vue agrandie d'une partie de la Figure 1;
- la Figure 4 est une vue agrandie d'une partie d'un servomoteur conforme à un mode de réalisation perfectionné de l'invention, observé à l'instant de l'application d'une force de freinage relativement lente et modérée;
- la Figure 5 est une vue semblable à la Figure 4, illustrant un servomoteur perfectionné observé après l'application d'une force de freinage relativement brusque et importante; et
- la Figure 6 est une vue en perspective d'un organe intermédiaire utilisable dans le servomoteur des Figures 4 et 5.

Un servomoteur pneumatique d'assistance conforme à l'invention comprend, de façon connue, une enveloppe rigide 1 définissant un volume interne qu'une cloison mobile 2 sépare de façon étanche en une chambre avant 11 et une chambre arrière 12, la chambre avant 11 étant en fonctionnement soumise à une première pression P1, relativement basse.

Un piston pneumatique 3 se déplace avec la cloison mobile 2 et traverse à coulissement une ouverture 13 de l'enveloppe 1.

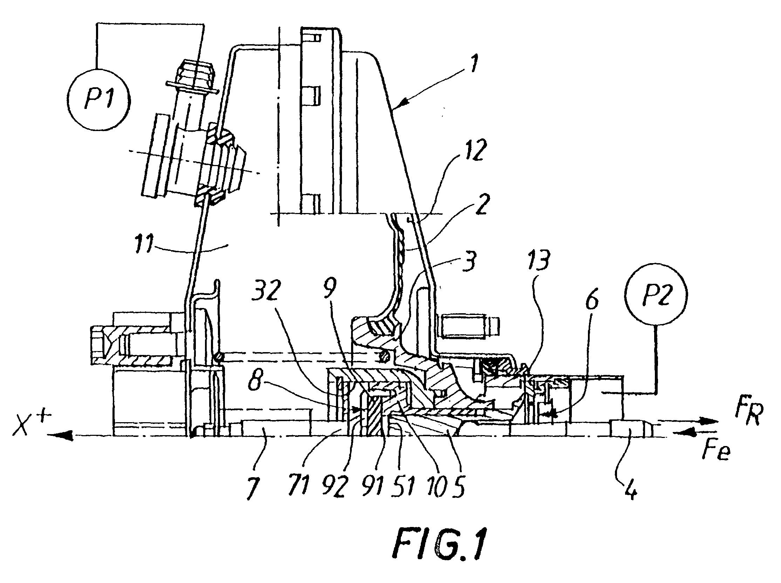

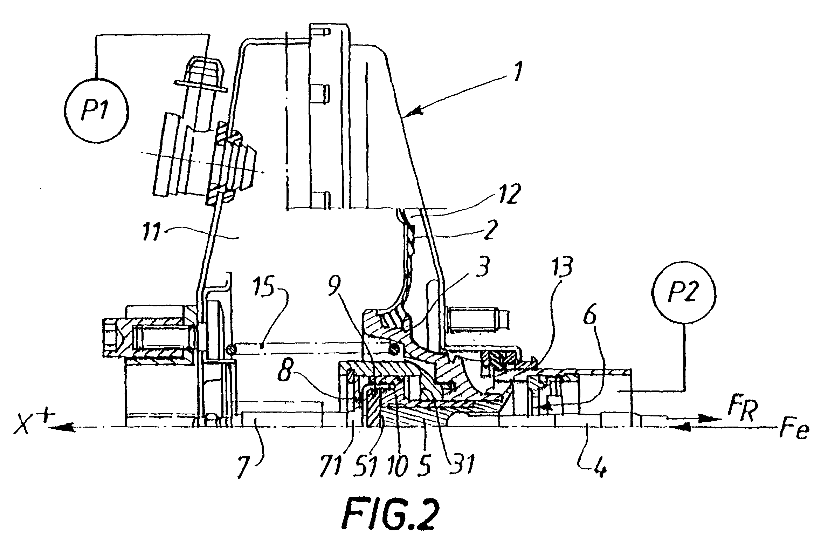

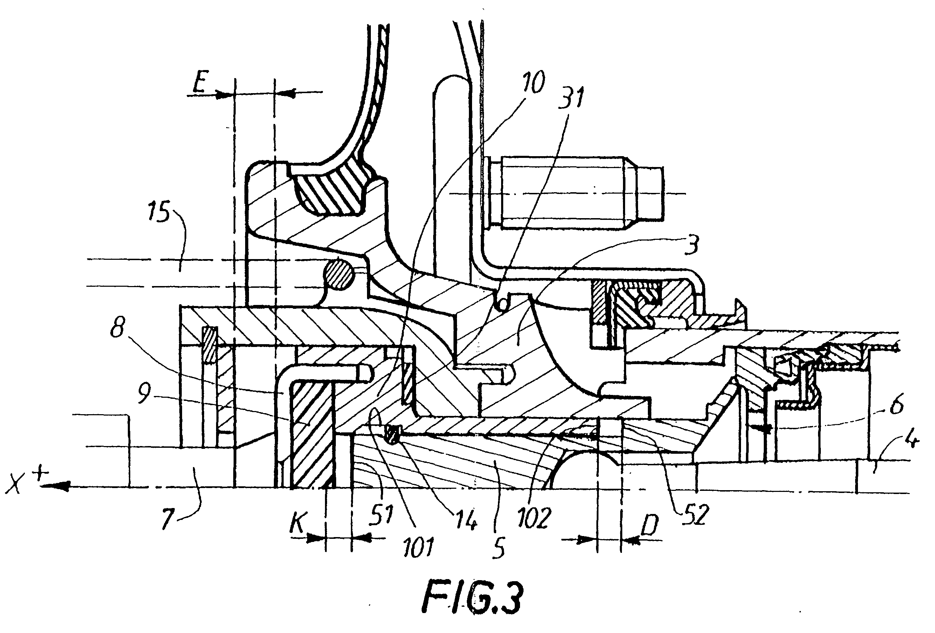

Le servomoteur est commandé par une tige de commande 4 mobile dans le piston 3 entre une position de repos (figures 1 et 3) et une position d'actionnement extrême (figure 2), la position de cette tige dans le piston dépendant notamment à la fois d'une force d'entrée Fe qui est appliquée sur cette tige, suivant une direction axiale d'actionnement X+, par la pédale de frein (non représentée), de la vitesse avec laquelle est appliquée cette force d'entrée Fe, d'une force de rappel Fr exercée dans la direction inverse par tout moyen approprié, et d'une force de réaction de même sens que la force de rappel.

Lorsque la force d'entrée Fe est appliquée lentement sur la tige de commande 4, cette dernière adopte une position d'actionnement intermédiaire entre sa position de repos (figures 1 et 3) et sa position d'actionnement extrême (figure 2), la tige de commande n'atteignant sa position d'actionnement extrême que lorsque la force d'entrée Fe est appliquée avec une vitesse supérieure à une vitesse limite donnée.

Un plongeur 5, entraîné par la tige de commande 4, est monté coulissant dans le piston 3 pour contrôler l'état d'un clapet à trois voies 6.

Lorsque le servomoteur est au repos (figures 1 et 3), le clapet 6 isole la chambre arrière 12 vis-à-vis d'une source de pression, en général constituée par l'atmosphère, qui délivre une pression P2 supérieure à la pression P 1 à laquelle est soumise la chambre avant 11.

En revanche, lorsqu'une force d'entrée Fe sensiblement supérieure à la force de rappel Fr est exercée sur la tige 4, cette force Fe provoque un déplacement du plongeur 5 dans la direction d'actionnement X+, et le clapet 6 ouvre la chambre arrière 12 à la pression P2.

L'admission d'air dans la chambre arrière repousse la cloison mobile 2 dans la direction d'actionnement X+ et engendre une force d'assistance Fa (non représentée) qui s'exerce sur la face avant 31 du piston 3.

La force d'entrée Fe, qui est transmise par la face avant 51 du plongeur 5, et la force d'assistance Fa, qui est transmise par la face avant 31 du piston 3, sont appliquées conjointement à des organes de transmission de force qui les utilisent pour actionner un émetteur de pression de freinage (non représenté).

De façon classique, ces organes de transmission de force comprennent essentiellement une tige de poussée 7 dont une extrémité 71 adjacente au plongeur est coiffée par une coupelle 8, et un disque de réaction 9 logé dans la coupelle 8.

Plus précisément, une première face 91 du disque de réaction 9 reçoit la force d'entrée Fe et la force d'assistance Fa, et une seconde face 92 du disque de réaction 9 prend appui sur la coupelle 8.

Des moyens de butée, qui prennent généralement la forme d'une clé d'arrêt disposée entre le plongeur 5 et le piston 3 dans l'art antérieur, sont également prévus pour limiter à une course déterminée K (figure 3) le coulissement du plongeur 5 par rapport à la coupelle 8, ces moyens de butée ayant dans l'invention une autre disposition et assurant une autre fonction.

Selon l'invention, la transmission des forces appliquées est partiellement assurée par un organe intermédiaire 10, qui est monté axialement coulissant par rapport au plongeur 5 et au piston 3, et qui est susceptible d'être entraîné par le plongeur 5, par rapport au piston 3, sur une distance d'entraînement E supérieure à la course K que le plongeur 5 peut parcourir par rapport à la coupelle 8 (figure 3).

L'organe intermédiaire 10 est monté coulissant dans un alésage axial étagé 32 du piston et radialement disposé entre le plongeur 5 et la coupelle 8 d'une part, et l'alésage 32 d'autre part.

Cet organe intermédiaire 10 est par ailleurs au moins en partie interposé, suivant la direction axiale X+, entre la face avant 31 du piston 3 et la première face 91 du disque de réaction 9 pour pouvoir retransmettre au disque de réaction 9 la force d'assistance Fa, lorsque cette force Fa apparaît et sollicite l'organe intermédiaire 10 dans la direction axiale d'actionnement X+.

Enfin, selon l'invention, les moyens de butée sont portés par le plongeur 5 et par l'organe intermédiaire 10 et servent à définir un débattement maximum D du plongeur 5 par rapport à l'organe intermédiaire 10 (figure 3).

Dans ces conditions, non seulement l'application rapide d'une force d'entrée Fe sur la tige de commande 4 permet d'actionner immédiatement la tige de poussée 7 sans avoir à entraîner le piston 3, mais en outre, la valeur importante donnée à la distance d'entraînement E permet une ouverture optimale du clapet 6, donc une réduction du temps de réponse du servomoteur.

Dans le mode de réalisation illustré, donné à titre d'exemple, les moyens de butée comprennent d'une part un jonc 14 solidaire du plongeur 5 et monté coulissant dans une gorge 101 de l'organe intermédiaire 10 pour définir la position la plus avancée de l'organe intermédiaire 10 par rapport au plongeur 5 dans la direction axiale X+, et d'autre part un épaulement 52 du plongeur coopérant sélectivement avec une face arrière 102 de l'organe intermédiaire 10, pour définir la position la plus avancée du plongeur 5 par rapport à l'organe intermédiaire 10 dans cette même direction axiale X+.

Grâce à l'agencement donné au servomoteur de l'invention, il est ainsi possible de faire en sorte que le piston 3 soit sollicité vers sa position de repos (figures 1 et 3) par un ressort 15 qui n'exerce aucune force sur l'organe intermédiaire 10 lui-même.

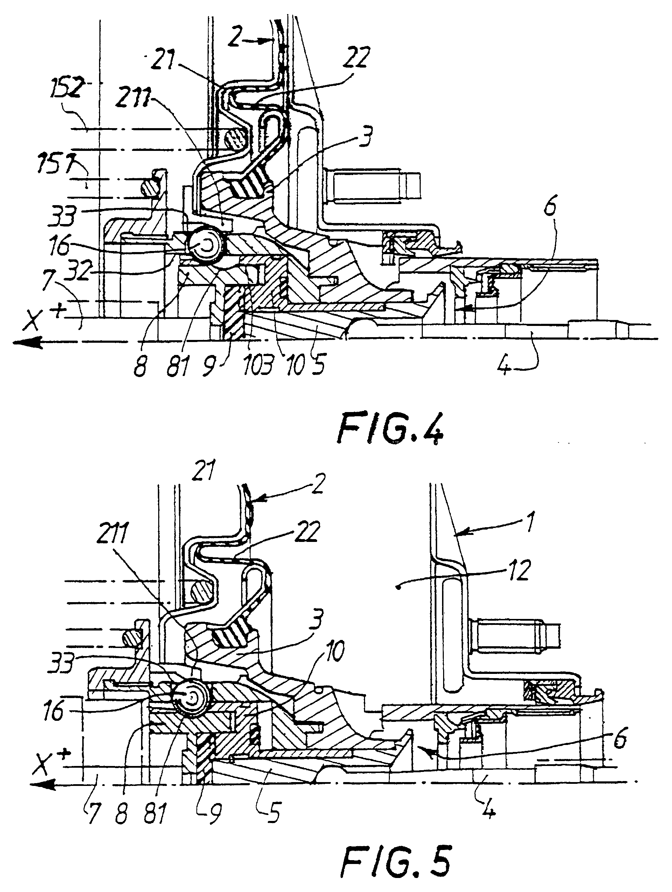

Les figures 4 à 6 illustrent une variante du servomoteur décrit jusqu'à présent, et dans laquelle, après un actionnement brusque du servomoteur, la force d'assistance est directement transmise à la tige de poussée, de sorte que les freins continuent d'être actionnés sans que la force d'entrée doive continuer à vaincre une force de réaction proportionnelle à la force d'assistance.

Dans ce mode de réalisation, la cloison mobile 2 comprend une jupe rigide 21 indépendante du piston 3, et une membrane souple 22 solidaire du piston 3, la jupe rigide 21 étant ainsi montée coulissante par rapport au piston 3 pour pouvoir prendre, par rapport à ce piston 3, une position avancée dans la direction axiale d'actionnement X+, telle que représentée à la figure 5.

D'autre part, le servomoteur comprend des moyens permettant d'assujettir la coupelle 8 par rapport au piston 3, ces moyens d'assujettissement étant placés dans un état opérationnel par l'organe intermédiaire 10 lorsque cet organe intermédiaire 10 atteint une position d'entraînement prédéterminée par rapport au piston 3, telle qu'illustrée à la figure 5, et étant bloqués dans leur état opérationnel par la jupe rigide 21, lorsque cette jupe 21 adopte sa position avancée.

A cette fin, on prévoit par exemple un perçage radial à bord franc 33 pratiqué dans l'alésage axial 32 du piston 3, un perçage radial à bord progressif 103 pratiqué dans l'organe intermédiaire 10, un logement externe 81 défini sur la coupelle 8, et une bille 16 engagée dans le perçage à bord franc 33.

Les perçages 33, 103, et le logement 81 sont disposés les uns par rapport aux autres de façon telle que la bille 16 traverse le perçage à bord progressif 103 et vient s'engager dans le logement 81 lorsque l'organe intermédiaire 10 a atteint sa position d'entraînement prédéterminée, comme le montre la figure 5.

Par ailleurs, la jupe rigide 21 présente de préférence un bord interne de blocage 211 propre à appliquer la bille 16 dans le fond du logement 81 lorsque cette jupe 21 adopte sa position avancée alors que l'organe intermédiaire 10 a atteint sa position d'entraînement prédéterminée, la jupe rigide permettant ainsi de confirmer l'assujettissement de la coupelle 8 par rapport au piston 3 au moyen de la bille 16.

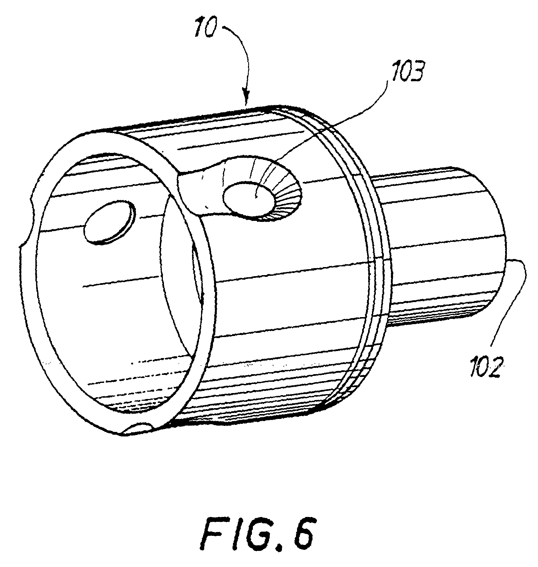

Bien entendu, le servomoteur de l'invention peut comprendre plusieurs perçages tels que 33, 103, plusieurs logements tels que 81, et plusieurs billes telles que 16, la figure 6 représentant un organe intermédiaire 10 conçu pour un servomoteur utilisant trois de chacun de ces composants.

En outre, il peut être utile de prévoir deux ressorts 151 et 152 à la place du ressort unique 15 illustré aux figures 2 et 3, de manière à permettre le retour, en position de repos, à la fois du piston 3 et de la jupe rigide 21.

Le fonctionnement spécifique du servomoteur illustré aux figures 4 à 6 est le suivant.

Dans le cas d'un coup de frein modéré à la fois en vitesse et en intensité (figure 4), le piston 3 est entraîné dans la direction d'actionnement X+ à une vitesse au moins aussi grande que celle avec laquelle se déplace le plongeur 5 et l'organe intermédiaire 10, de sorte que la bille 16, guidée dans le perçage à bord franc 33, reste sur un bord du perçage à bord progressif 103 sans pouvoir tomber dans le logement 81 de la coupelle 8.

Dans ces conditions, la force d'assistance exercée par le piston 3 est transmise par l'organe intermédiaire 10 au disque de réaction 9. qui exerce en retour une force de réaction appliquée au plongeur 5.

En revanche, dans le cas d'un coup de frein à la fois rapide et intense (figure 5), le piston 3 est entraîné dans la direction d'actionnement X+ à une vitesse beaucoup moins grande que celle avec laquelle se déplace le plongeur 5 et l'organe intermédiaire 10, de sorte que la bille 16, guidée dans le perçage à bord franc 33, traverse le perçage à bord progressif 103 et tombe dans le logement 81 de la coupelle 8. La jupe rigide 21, progressant dans la direction d'actionnement X+, vient alors confirmer, par application de son bord interne 211 sur la bille 16, le maintien de cette bille dans le logement 81.

Dans ces conditions, la coupelle 8, le piston 3 et la jupe rigide 21 se déplacent ensemble comme s'ils constituaient une pièce unique et continuent à appliquer un effort de freinage sans que la force d'entrée Fe ait à vaincre la force de réaction Fr qui déforme le disque 9, au moins pour autant que cette force d'entrée reste suffisante pour continuer à maintenir le clapet 6 ouvert.

En résumé, les caractéristiques spécifiques décrites en référence aux figures 4 à 6 confèrent au servomoteur de l'invention la propriété de se placer, à la suite d'un coup de frein brusque, dans un état particulier dans lequel ce servomoteur continue d'appliquer une force de freinage même lorsque la force d'entrée n'est plus suffisante pour rester proportionnelle à cette force de freinage.

## Revendications

1. Servomoteur pneumatique d'assistance au freinage comprenant : une enveloppe rigide (1); une cloison mobile (2) délimitant, de façon étanche, une chambre avant (11) et une chambre arrière (12) à l'intérieur de l'enveloppe (1), la chambre avant (11) étant en fonctionnement soumise à une première pression (P1) et la chambre arrière (12) étant sélectivement reliée à la chambre avant (11) ou soumise à une seconde pression (P2) supérieure à la première (P1); un piston pneumatique (3) se déplaçant avec la cloison mobile (2); une tige de commande axiale (4) se déplaçant dans le piston (3) en fonction d'une force d'entrée (Fe) sélectivement exercée à l'encontre d'une force de rappel (Fr) et orientée suivant une direction axiale d'actionnement (X+) pointant vers la chambre avant (11), la force de rappel (Fr) sollicitant la tige de commande (4) vers une position de retour et la force d'entrée (Fe) sollicitant la tige de commande (4) vers une position d'actionnement qui dépend de la force d'entrée (Fe); un plongeur (5) entraîné en coulissement dans le piston (3) par la tige de commande (4); un clapet à trois voies (6) reliant la chambre arrière (12) à la chambre avant (11) lorsque la tige de commande (4) est en position de repos, et soumettant la chambre arrière (12) à la seconde pression (P2) lorsqu'il est actionné par un déplacement de la tige de commande (4) vers sa position d'actionnement; et des moyens de transmission de force (7, 8, 9, 10), propres à recevoir et à retransmettre une partie au moins de la force d'entrée (Fe) transmise par une face avant (51) du plongeur (5), et une force d'assistance (Fa) exercée par une face avant (31) du piston (3) lorsque le clapet (6) est actionné, ces moyens de transmission de force (7, 8, 9, 10) comprenant eux-mêmes une tige de poussée (7) dont une extrémité (71) adjacente au plongeur est coiffée par une coupelle (8) dans laquelle est logé un disque de réaction (9), une première face (91) du disque de réaction (9) recevant la force d'entrée (Fe) et la force d'assistance (Fa), et une seconde face (92) du disque de réaction (9) prenant appui sur la coupelle (8); et des moyens de butée (14, 101, 52, 102) pour limiter à une course déterminée (K) le coulissement du plongeur (5) par rapport à la coupelle (8), **caractérisé en ce que** les moyens de transmission de force (7, 8, 9, 10) comprennent un organe intermédiaire (10) monté axialement coulissant par rapport au plongeur (5) et au piston (3). et susceptible d'être entraîné par le plongeur (5), par rapport au piston (3), sur une distance d'entraînement (E) supérieure à la course déterminée (K), **en ce que** cet organe intermédiaire (10) est au moins en partie interposé entre la face avant (31) du piston (3) et la première face (91) du disque de réaction (9) pour pouvoir retransmettre au disque de réaction (9) la force d'assistance (Fa), lorsqu'elle apparaît, et **en ce que** les moyens de butée (14, 101, 52, 102) sont portés par le plongeur (5) et l'organe intermédiaire (10) et définissent un débattement maximum (D) du plongeur (5) par rapport à l'organe intermédiaire (10).

2. Servomoteur suivant la revendication 1, **caractérisé en ce que** l'organe intermédiaire (10) est en partie au moins radialement disposé entre le plongeur (5) et un alésage axial étagé (32) du piston (3).

3. Servomoteur suivant la revendication 2, **caractérisé en ce que** l'organe intermédiaire (10) est en partie au moins radialement disposé entre la coupelle (8) et l'alésage axial étagé (32) du piston (3).

4. Servomoteur suivant l'une quelconque des revendications précédentes, **caractérisé en ce que** les moyens de butée (14, 101, 52, 102) comprennent un jonc (14) solidaire du plongeur (5) et monté coulissant dans une gorge (101) de l'organe intermédiaire (10).

5. Servomoteur suivant l'une quelconque des revendications précédentes, **caractérisé en ce que** les moyens de butée (14, 101, 52, 102) comprennent un épaulement (52) du plongeur susceptible de venir en appui sur une face arrière (102) de l'organe intermédiaire (10).

6. Servomoteur suivant l'une quelconque des revendications précédentes, **caractérisé en ce que** le piston est sollicité vers une position de repos par un ressort (15) qui n'exerce aucune force sur l'organe intermédiaire (10).

7. Servomoteur suivant la revendication 3, **caractérisé en ce que** la cloison mobile (2) comprend une jupe rigide (21) montée coulissante par rapport au piston (3) pour pouvoir prendre, par rapport au piston (3), une position avancée dans la direction axiale d'actionnement (X+), et **en ce que** le servomoteur comprend des moyens d'assujettissement (33, 103, 81, 16) de la coupelle (8) par rapport au piston (3), ces moyens d'assujettissement (33, 103, 81, 16) étant placés dans un état opérationnel par l'organe intermédiaire (10) lorsque cet organe intermédiaire (10) atteint une position d'entraînement prédéterminée par rapport au piston (3), et étant bloqués dans leur état opérationnel par la jupe rigide (21), lorsque cette jupe rigide (21) adopte sa position avancée.

8. Servomoteur suivant la revendication 7, **caractérisé en ce que** les moyens d'assujettissement (33, 103, 81, 16) de la coupelle (8) par rapport au piston (3) comprennent un perçage radial à bord franc (33) pratiqué dans l'alésage axial (32) du piston (3), un perçage radial à bord progressif (103) pratiqué dans l'organe intermédiaire (10), un logement externe (81) défini sur la coupelle (8), et une bille (16) engagée dans le perçage à bord franc (33), cette bille (16) traversant le perçage à bord progressif (103) pour venir s'engager dans le logement (81) lorsque l'organe intermédiaire (10) a atteint sa position d'entraînement prédéterminée.

9. Servomoteur suivant la revendication 8, **caractérisé en ce que** la jupe rigide (21) présente un bord interne de blocage (211) propre à appliquer la bille (16) dans le logement (81) lorsque cette jupe rigide (21) adopte sa position avancée alors que l'organe intermédiaire (10) a atteint sa position d'entraînement prédéterminée.

## Claims

1. Pneumatic brake booster comprising: a rigid casing (1); a moving partition (2) delimiting, in leaktight manner, a front chamber (11) and a rear chamber (12) inside the casing (1), the front chamber (11) in operation being subject to a first pressure (P1) and the rear chamber (12) being connected selectively to the front chamber (11) or subject to a second pressure (P2) higher than the first (P1); a pneumatic piston (3) moving with the moving partition (2); an axial operating rod (4) moving in the piston (3) as a function of an input force (Fe) selectively exerted against a return force (Fr) and oriented in an axial actuating direction (X+) pointing towards the front chamber (11), the return force (Fr) urging the operating rod (4) towards a return position, and the input force (Fe) urging the operating rod (4) towards an actuating position which depends on the input force (Fe); a plunger (5) made to slide in the piston (3) by the operating rod (4); a three-way valve (6) connecting the rear chamber (12) to the front chamber (11) when the operating rod (4) is in the position of rest, and subjecting the rear chamber (12) to the second pressure (P2) when actuated by a movement of the operating rod (4) towards its actuating position; and force-transmission means (7, 8, 9, 10) capable of receiving and of passing on at least part of the input force (Fe) transmitted by a front face (51) of the plunger (5), and a boost force (Fa) exerted by a front face (31) of the piston (3) when the valve (6) is actuated, these force-transmission means (7, 8, 9, 10) themselves comprising a pushrod (7) of which one end (71) adjacent to the plunger is capped by a cup (8) in which a reaction disc (9) is housed, a first face (91) of the reaction disc (9) receiving the input force (Fe) and the boost force (Fa), and a second face (92) of the reaction disc (9) bearing against the cup (8); and stop means (14, 101, 52, 102) for limiting the sliding of the plunger (5) with respect to the cup (8) to a predetermined travel (K), **characterized in that** the force-transmission means (7, 8, 9, 10) comprise an intermediate member (10) mounted to slide axially with respect to the plunger (5) and with respect to the piston (3), and capable of being driven by the plunger (5), with respect to the piston (3), over a driven distance (E) that exceeds the determined travel (K), and **in that** this intermediate member (10) is at least partially inserted between the front face (31) of the piston (3) and the first face (91) of the reaction disc (9) so as to be able to pass on to the reaction disc (9) the boost force (Fa) when it occurs, and **in that** the stop means (14, 101, 52, 102) are borne by the plunger (5) and the intermediate member (10) and define a maximum excursion (D) of the plunger (5) with respect to the intermediate member (10).

2. Booster according to Claim 1, **characterized in that** the intermediate member (10) is at least partially arranged radially between the plunger (5) and a stepped axial bore (32) of the piston (3).

3. Booster according to Claim 2, **characterized in that** the intermediate member (10) is at least partially arranged radially between the cup (8) and the stepped axial bore (32) of the piston (3).

4. Booster according to any one of the preceding claims, **characterized in that** the stop means (14, 101, 52, 102) comprise a snap ring (14) secured to the plunger (5) and mounted to slide in a groove (101) of the intermediate member (10).

5. Booster according to any one of the preceding claims, **characterized in that** the stop means (14, 101, 52, 102) comprise a step (52) of the plunger capable of coming to bear against a rear face (102) of the intermediate member (10).

6. Booster according to any one of the preceding claims, **characterized in that** the piston is urged towards a position of rest by a spring (15) which exerts no force on the intermediate member (10).

7. Booster according to Claim 3, **characterized in that** the moving partition (2) comprises a rigid skirt (21) mounted so that it can slide with respect to the piston (3) so that it can adopt, with respect to the piston (3), a forward position in the axial actuating direction (X+), and **in that** the booster comprises means (33, 103, 81, 16) of firmly securing the cup (8) to the piston (3), these securing means (33, 103, 81, 16) being placed in an operational state by the intermediate member (10) when this intermediate member (10) reaches a predetermined driven position with respect to the piston (3), and being locked in their operational state by the rigid skirt (21) when this rigid skirt (21) adopts its forward position.

8. Booster according to Claim 7, **characterized in that** the means (33, 103, 81, 16) of firmly securing the cup (8) to the piston (3) comprise a sharp-edged radial drilling (33) made in the axial bore (32) of the piston (3), a tapering-edged radial drilling (103) made in the intermediate member (10), an external housing (81) defined in the cup (8), and a ball (16) engaged in the sharp-edged drilling (33), this ball (16) passing through the tapering-edged drilling (103) to engage in the housing (81) when the intermediate member (10) has reached its predetermined driven position.

9. Booster according to Claim 8, **characterized in that** the rigid skirt (21) has an internal locking edge (211) capable of pressing the ball (16) into the housing (81) when this rigid skirt (21) adopts its forward position while the intermediate member (10) has reached its predetermined driven position.

## Patentansprüche

1. Pneumatischer Bremsunterstützungs-Servomotor mit: einem starren Gehäuse (1); einer beweglichen Trennwand (2), die in dichter Weise eine vordere Kammer (11) und eine hintere Kammer (12) im Inneren des Gehäuses (1) abgrenzt, wobei die vordere Kammer (11) im Betrieb einem ersten Druck (P1) ausgesetzt wird und die hintere Kammer (12) selektiv mit der vorderen Kammer (11) verbunden wird oder einem zweiten Druck (P2), der höher ist als der erste (P1), ausgesetzt wird; einem pneumatischen Kolben (3), der sich mit der beweglichen Trennwand (2) verschiebt; einer axialen Steuerstange (4), die sich im Kolben (3) entsprechend einer Eingangskraft (Fe) verschiebt, die selektiv gegen eine Rückstellkraft (Fr) ausgeübt wird und entlang einer axialen Betätigungsrichtung (X+) orientiert ist, die zur vorderen Kammer (11) zeigt, wobei die Rückstellkraft (Fr) die Steuerstange (4) zu einer Rückzugsposition hin beaufschlagt und die Eingangskraft (Fe) die Steuerstange (4) zu einer Betätigungsposition hin beaufschlagt, die von der Eingangskraft (Fe) abhängt; einem Tauchkolben (5), der im Kolben (3) durch die Steuerstange (4) gleitend mitgenommen wird; einem Dreiwege-Ventilelement (6), das die hintere Kammer (12) mit der vorderen Kammer (11) verbindet, wenn sich die Steuerstange (4) in der Ruhestellung befindet, und die hintere Kammer (12) dem zweiten Druck (P2) aussetzt, wenn es durch eine Verschiebung der Steuerstange (4) in seine Betätigungsposition betätigt wird; und Mitteln zur Kraftübertragung (7, 8, 9, 10), die zumindest einen Teil der Eingangskraft (Fe), die durch eine vordere Fläche (51) des Tauchkolbens (5) übertragen wird, und eine Unterstützungskraft (Fa), die durch eine vordere Fläche (31) des Kolbens (3) ausgeübt wird, wenn das Ventilelement (6) betätigt wird, aufnehmen und übertragen können, wobei diese Mittel zur Kraftübertragung (7, 8, 9, 10) selbst eine Schubstange (7) umfassen, von welcher ein Ende (71) benachbart zum Tauchkolben von einer Schale (8) bedeckt ist, in der eine Reaktionsscheibe (9) aufgenommen ist, wobei eine erste Fläche (91) der Reaktionsscheibe (9) die Eingangskraft (Fe) und die Unterstützungskraft (Fa) aufnimmt und eine zweite Fläche (92) der Reaktionsscheibe (9) an der Schale (8) anliegt, und Anschlagmitteln (14, 101, 52, 102) zum Begrenzen der Verschiebung des Tauchkolbens (5) bezüglich der Schale (8) auf einen festgelegten Weg (K), **dadurch gekennzeichnet, daß** die Mittel zur Kraftübertragung (7, 8, 9, 10) eine Zwischeneinrichtung (10) umfassen, die axial verschiebbar bezüglich des Tauchkolbens (5) und des Kolbens (3) montiert ist und durch den Tauchkolben (5) bezüglich des Kolbens (3) auf einer Mitnahmedistanz (E), die größer ist als der festgelegte Weg (K), mitgenommen werden kann, daß diese Zwischeneinrichtung (10) zumindest teilweise zwischen die vordere Fläche (31) des Kolbens (3) und die erste Fläche (91) der Reaktionsscheibe (9) eingefügt ist, um die Unterstützungskraft (Fa) auf die Reaktionsscheibe (9) zurückübertragen zu können, wenn diese erscheint, und daß die Anschlagmittel (14, 101, 52, 102) vom Tauchkolben (5) und von der Zwischeneinrichtung (10) getragen werden und einen maximalen Verschiebungsweg (D) des Tauchkolbens (5) bezüglich der Zwischeneinrichtung (10) festlegen.

2. Servomotor nach Anspruch 1, **dadurch gekennzeichnet, daß** die Zwischeneinrichtung (10) zumindest teilweise radial zwischen dem Tauchkolben (5) und einer abgestuften axialen Bohrung (32) des Kolbens (3) angeordnet ist.

3. Servomotor nach Anspruch 2, **dadurch gekennzeichnet, daß** die Zwischeneinrichtung (10) zumindest teilweise radial zwischen der Schale (8) und der abgestuften axialen Bohrung (32) des Kolbens (3) angeordnet ist.

4. Servomotor nach einem der vorangehenden Ansprüche, **dadurch gekennzeichnet, daß** die Anschlagmittel (14, 101, 52, 102) einen Ring (14) umfassen, der mit dem Tauchkolben (5) fest verbunden ist und in einer Nut (101) der Zwischeneinrichtung (10) verschiebbar angebracht ist.

5. Servomotor nach einem der vorangehenden Ansprüche, **dadurch gekennzeichnet, daß** die Anschlagmittel (14, 101, 52, 102) einen Absatz (52) des Tauchkolbens umfassen, der an einer hinteren Fläche (102) der Zwischeneinrichtung (10) zum Anliegen kommen kann.

6. Servomotor nach einem der vorangehenden Ansprüche, **dadurch gekennzeichnet, daß** der Kolben durch eine Feder (15), die keine Kraft auf die Zwischeneinrichtung (10) ausübt, in eine Ruhestellung beaufschlagt wird.

7. Servomotor nach Anspruch 3, **dadurch gekennzeichnet, daß** die bewegliche Trennwand (2) einen starren Mantel (21) umfaßt, der bezüglich des Kolbens (3) verschiebbar montiert ist, um bezüglich des Kolbens (3) eine in der axialen Betätigungsrichtung (X+) vorgeschobene Position einnehmen zu können, und daß der Servomotor Mittel zum Befestigen (33, 103, 81, 16) der Schale (8) bezüglich des Kolbens (3) umfaßt, wobei diese Mittel zum Befestigen (33, 103, 81, 16) in einem Betriebszustand durch die Zwischeneinrichtung (10) angeordnet werden, wenn diese Zwischeneinrichtung (10) eine vorbestimmte Mitnahmeposition bezüglich des Kolbens (3) erreicht, und in ihrem Betriebszustand durch den starren Mantel (21) blockiert werden, wenn dieser starre Mantel (21) seine vorgeschobene Position einnimmt.

8. Servomotor nach Anspruch 7, **dadurch gekennzeichnet, daß** die Mittel zum Befestigen (33, 103, 81, 16) der Schale (8) bezüglich des Kolbens (3) eine radiale Bohrung mit gleichmäßigem Rand (33), die in der axialen Bohrung (32) des Kolbens (3) ausgebildet ist, eine radiale Bohrung mit sich verbreiterndem Rand (103), die in der Zwischeneinrichtung (10) ausgebildet ist, eine äußere Aufnahme (81), die auf der Schale (8) festgelegt ist, und eine Kugel (16), die mit der Bohrung mit gleichmäßigem Rand (33) in Eingriff steht, umfassen, wobei diese Kugel (16) die Bohrung mit sich verbreiterndem Rand (103) durchquert, um mit der Aufnahme (81) in Eingriff zu kommen, wenn die Zwischeneinrichtung (10) ihre vorbestimmte Mitnahmeposition erreicht hat.

9. Servomotor nach Anspruch 8, **dadurch gekennzeichnet, daß** der starre Mantel (21) einen inneren Rand zum Blockieren (211) aufweist, der die Kugel (16) in die Aufnahme (81) einsetzen kann, wenn dieser starre Mantel (21) seine vorgeschobene Position einnimmt, während die Zwischeneinrichtung (10) ihre vorbestimmte Mitnahmeposition erreicht hat.
